(19) **Europäisches Patentamt**
**European Patent Office**
**Office européen des brevets**

(11) **EP 1 476 950 B1**

(12) **EUROPEAN PATENT SPECIFICATION**

(45) Date of publication and mention
of the grant of the patent:
**13.08.2008 Bulletin 2008/33**

(51) Int Cl.:
*H04B 1/18* (2006.01)

(21) Application number: **03709295.4**

(86) International application number:
**PCT/US2003/005473**

(22) Date of filing: **21.02.2003**

(87) International publication number:
**WO 2003/073631 (04.09.2003 Gazette 2003/36)**

(54) **Multimode Direct Conversion Receiver with Reconfigurable Baseband Combined Chebychev/inverse Chebychev Filter**

Multimode Direktkonversionsempfänger mit einem rekonfigurierbaren Basisband kombinierten Chebychev/inverse Chebychev Filter

Récepteur multimode avec conversion directe et un filtre Chebychev/inverse Chebychev combiné reconfigurable en bande de base

(84) Designated Contracting States:
**DE FR GB**

(30) Priority: **21.02.2002 GB 0204108**
**30.12.2002 US 331622**

(43) Date of publication of application:
**17.11.2004 Bulletin 2004/47**

(73) Proprietor: **MediaTek Inc.**
**1st Science-Based Industrial Park**
**Hsin-Chu 300 (TW)**

(72) Inventors:
• **ATKINSON, Simon**
**Heathfield**
**East Sussex TN21 0XW (GB)**
• **BIRK, Palle**
**DK-9260 Gistrup (DK)**
• **HO, Stacy**
**Mass 01867 (US)**
• **ZVONAR, Zoran**
**Boston, MA 02218 (US)**
• **CAHALANE, Aidan**
**Dunmanway**
**County Cork (IE)**

(74) Representative: **Beck, Simon Antony et al**
**Withers & Rogers LLP**
**Goldings House,**
**2 Hays Lane**
**London SE1 2HW (GB)**

(56) References cited:
**EP-A- 0 722 226**      **WO-A-00/31885**
**US-A- 5 896 562**      **US-B1- 6 185 434**
**US-B1- 6 215 988**

• **SPRINGER A ET AL: "RF SYSTEM CONCEPTS FOR HIGHLY INTEGRATED RFICS FOR W-CDMA MOBILE RADIO TREMINALS" IEEE TRANSACTIONS ON MICROWAVE THEORY AND TECHNIQUES, IEEE INC. NEW YORK, US, vol. 50, no. 1, PART 2, January 2002 (2002-01), pages 254-267, XP001085548 ISSN: 0018-9480**
• **TSURUMI H ET AL: "SYSTEM-LEVEL COMPENSATION APPROACH TO OVERCOME SIGNAL SATURATION, DC OFFSET, AND 2ND-ORDER NONLINEAR DISTORTION IN LINEAR DIRECT CONVERSION RECEIVER" IEICE TRANSACTIONS ON ELECTRONICS, INSTITUTE OF ELECTRONICS INFORMATION AND COMM. ENG. TOKYO, JP, vol. E82-C, no. 5, May 1999 (1999-05), pages 708-715, XP000919541 ISSN: 0916-8524**

EP 1 476 950 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to device architecture of mobile telephony units.

There are an emerging number of standards for cellular communication. For example, the European GSM system works in transmission bands known as GSM 850, GSM 900, GSM 1800 and GSM 1900, where the numeric part of the name is indicative of the frequency of the band expressed in MHz. Furthermore, the UMTS system operates on a transmission band between 1.92 and 1.98 GHz. It would clearly be desirable if a telecommunications device could easily switch between these various telecommunications standards depending on which service it wished to use, or indeed which service was available.

"RF systems concepts for highly integrated RFICs for W-CDMA mobile radio terminals". Springer et al, IEEE Transactions on Microwave Theory and Techniques, Vol. 50, No.1, January 2002, discloses a direct conversion receiver and that the possibility of changing the bandwidth of the integrated low pass filters is a major advantage is multimode and multiband applications are of concern.

EP 722226 discloses a mobile telephone with a filter that has an electronically variable bandwidth.

According to the present invention, there is provided a direct conversion multimode receiver as claimed in claim 1.

It is thus possible, by providing reconfigurable filters, to manipulate the output from the direct conversion multimode receiver such that it is suitable for additional processing operations to be performed on the signal in order to extract the data therein.

In the direct conversion topology, it is highly desirable in order to be able to provide an offset to the output from the receiver. A reason for this is that the down conversion is performed by mixing the received radio signal, which is nominally centered about a frequency $F_r$, with a locally produced radio signal, also having a frequency of $F_r$. It therefore follows that the carrier of the received signal is down converted to a DC signal (or very near DC in the case of oscillator frequency mismatch). Any spurious DC offset (or low frequency signal) therefore needs to be subtracted from the output of the converter in order to reduce the dynamic range required of the subsequent processing circuitry, which in reality will comprise analog to digital converters such that further processing can then be performed in the digital domain. The act of removing the DC offset means that the dynamic range and resolution of the converters required can be reduced, therefore reducing the cost of the subsequent processing circuitry.

The filter may be implemented in hardware or software. Hardware implementations will tend to be preferred as they do not place so great a load upon post ADC processing resources.

When designing an analog filter for communications applications, there are generally difficult trade-offs to be made between requirements for selectivity, group delay and complexity. Ideally, we want the physical delay for a signal passing through the filter to be uniform irrespective of its frequency content. Thus, in terms of a phase versus frequency graph, the phase delay needs to increase linearly with frequency.

In the context of telecommunications, and in particular UMTS communications, it is important that differential group delay be avoided as this can give rise to inter-symbol interference.

However, it is also generally necessary to obtain good selectivity, that is a rapid transition between the pass band and stop band.

It is well known that high Q filters that display good selectivity performance such as Chebychev and Elliptic filters often suffer in terms of differential group delay performance. On the other hand, filters that exhibit good differential group delay performance such as Butterworth and Bessel filters generally have inferior roll-off characteristics. The inventor has realized that combination of different filter characteristics can be arranged to give a desired response. The new filter design avoids the draw backs of conventional filter technologies and provides excellent selectivity, attenuation and differential group delay characteristics. The inventor has noted that the inverse Chebychev pass band characteristics are substantially identical to those of the Butterworth, but the filter contains stop-band zeros which give superior initial roll-off performance. On the other hand, the Chebychev filter has good initial roll-off characteristics and very high levels of ultimate attenuation.

Turning to the group delay characteristic, it is known to the person skilled in the art that at frequencies well below the cut-off frequencies, both the Chebychev and inverse Chebychev filters exhibit substantially uniform group delay. However, in the region of the cut-off frequency the first derivative of the group delay for the two different filters has opposite signs. The inventor has realized that by combining the two characteristics it is possible to achieve substantial cancellation of the group delay characteristics in the region near the cut-off frequency. This cancellation can be arranged to be sufficient to ensure that by the time the group delay cancellation begins to fail, thereby resulting in undesirable group delay characteristics, the magnitude of the signals have been sufficiently attenuated at these frequencies such that they become relatively unimportant.

The hybrid filter represents a good choice for a reconfigurable switched band multi-mode filter whose modes of operation may place differing demands on the filter performance. Thus, in the context of a multi-mode receiver, one mode of operation may place stringent requirements on the filter in terms of differential group delay, but not such difficult requirements in terms of selectivity. The other mode of operation might have more stringent requirements in terms of selectivity, but less difficult requirements in terms of differential group delay. The hybrid Chebychev/inverse Chebychev filter proposed here is an effective solution for both requirements. In addition to band switching the filter, it is also possble to adjust the relative cut-offs of the two constituent filters further optimizing performance in different modes of operation.

The present invention will further be described, by way of example, with reference to the accompanying drawings, in which:

Figure 1 is a circuit diagram schematically illustrating a combined GSM and UMTS transmitter, with shared RF components integrated into a single circuit;

Figure 2 is a schematic diagram of the direct conversion multi-mode receiver;

Figure 3 is a graph comparing the group delays of low pass Chebychev and inverse Chebychev filters versus frequency;

Figure 4 is a graph of the magnitude response of low pass Chebychev and inverse Chebychev filters versus frequency;

Figure 5 shows the combined magnitude response of the filters of Figure 4;

Figure 6 schematically illustrates a combined GSM/UMTS transceiver; and

Figure 7 schematically illustrates an automatic gain control.

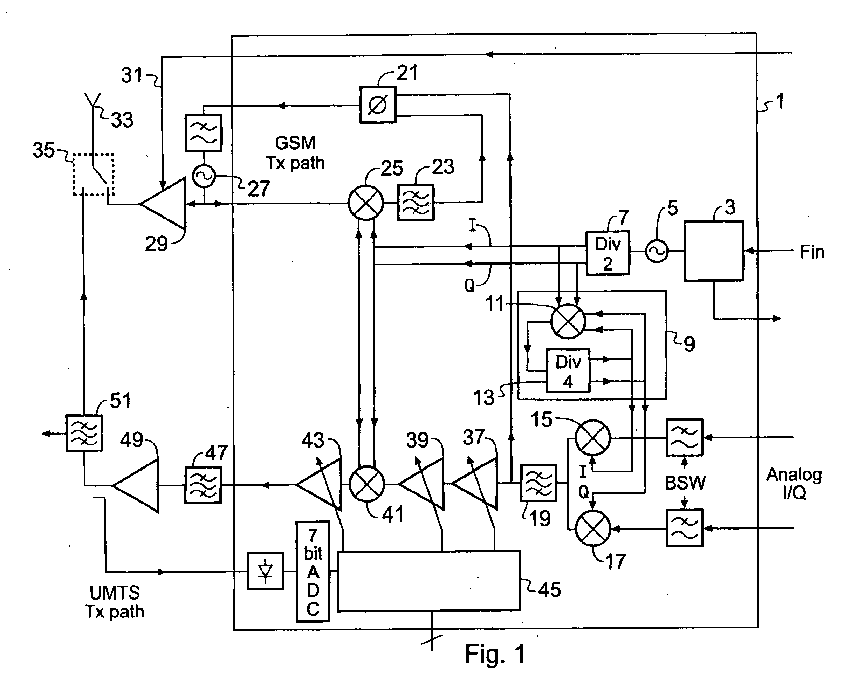

Figure 1 schematically illustrates transmitter circuitry according to an embodiment of the present invention. The transmitter can be selectively operated as either a dual band GSM transmitter, or alternatively as a 3G UMTS transmitter. The transmitter comprises a single chip 1 on which is located a single radio frequency synthesizer 3. In accordance with an input signal $f_{in}$ received by the synthesizer 3, the synthesizer controls a local oscillator 5 such that the oscillator 5 produces a substantially fixed frequency signal that is at either 1½ or 3 times the desired carrier frequency, depending on the actual desired operating frequency for the GSM or UMTS transmission path. It should be emphasized that the actual frequency of the signal generated by the general oscillator 5 does not substantially differ depending upon the band of transmission, only its ratio to the desired carrier frequency. The frequency of the signal generated by the local oscillator 5 may, for example, be approximately 2.7GHz and more specifically in the range of 2.565 to 2.970 GHz. This corresponds to a modest adjustment of $\pm 10\%$ (in fact around 7% in this example) of the frequency generated by the local oscillator.

The signal from the local oscillator 5 is then fed to a frequency divider 7 that divides the frequency of the signal by 2. The frequency divider 7 also allows the signal to be split into in-phase (I) and quadrature (Q) components. The I and Q components are fed into a further frequency divider 9 in the form of a regenerative divider that is arranged to divide the input frequency by 3. The divide by 3 frequency divider 9 comprises a frequency mixer 11 that receives the I and Q components of the input frequency signal and mixes them with corresponding components of the same signal that have been further frequency divided by 4 by a further frequency divider 13. The arrangement of the mixer 11 and divide by 4 divider 13 produces a divided by 3 frequency signal of the original input signal at the output of the divide by 4 divider 13. The I and Q components output from the divide by 3 divider 9 are therefore at ¼ or ½ of the carrier frequency. Taking our example of the input frequency $f_{in}$ of 2.7GHz, the I and Q components at the output of the divide 3 divider 9 are at 450MHz.

The individual I and Q components are supplied to respective individual mixers 15 and 17 that each also receive the respective I and Q components of the analogue source signal. The mixers 15 and 17 act to combine the respective source signal components together with the I and Q components at 450MHz to generate a 450MHz modulated intermediate frequency signal which it then passed through a bandpass filter 19.

The intermediate frequency at the output of the bandpass filter 19 is then propagated along two individual signal paths, each path being used to generate respectively the GSM signal or the 3G UMTS signal.

For GSM, the 450MHz intermediate frequency signal is fed to a first input of a phase comparator 21. The second input of the phase comparator 21 also receives a 450MHz signal that is received from a bandpass filter 23. The input to the bandpass filter 23 is derived from an image reject mixer 25. The image reject mixer 25 receives as first inputs the I and Q components of the 1.35GHz signal that is obtained from the combination of synthesizer 3, local oscillator 5 and divide by 2 divider 7. The other input to the image reject mixer 25 is the carrier frequency signal that is generated by a voltage controlled oscillator 27 that is in turn controlled by the output from the phase comparator 21. The phase comparator 21, voltage controlled oscillator 27 and image reject mixer constitute a phase locked loop that is used to translate the modulated intermediate frequency to the radio frequency carrier signal. The phase locked loop acts as a tracking bandpass filter and thus removes the need for an RF bandpass filter such as a SAW or ceramic filter that would otherwise be required to minimize out of band emissions.

The carrier frequency is substantially either 900MHz or 1.8GHz, depending upon the GSM band on which it is desired to transmit. The image reject mixer can selectively either subtract the 900MHz signal from the 1.35GHz I and Q component signals to arrive at the 450MHz signal input to the bandpass filters 23, or to subtract the 1.35GHz from the 1.8GHz carrier signal, thus also arriving at a 450MHz output. Thus the two signals input to the phase comparator 21 are always at 450MHz, i.e. the intermediate frequency. It is thus possible to cover the GSM 850/900 range and the GSM 1800/1900 range.

The modulated GSM signal is applied to a high power amplifier 29 that receives a power control signal on an input line 31. The output of the amplifier 29 is fed to an antenna 33 via a switch 35.

For 3G UMTS transmission, the intermediate frequency signal output from the bandpass filter 19 is fed through a pair of serially connected variable gain amplifiers 37, 39 prior to being mixed with the 1.35GHz signal derived from the local oscillator 5 and divide by 2 divider 7. The two signals are mixed at a single side band mixer 41 to produce a 1.8 GHz signal that is itself further amplified using a further single variable gain amplifier 43. Amplifiers 37, 39 and 43 are controlled using a power control circuit 45 that receives a sampled and digitized input signal representative of the power of the transmitted output signal obtained via a tap at the output of amplifier 49. The 1.8GHz signal from the power amplifier 43 is passed through a UMTS RF SAW filter 47 and a further UMTS power amplifier 49 before being transmitted via the antenna 33. The signal is also passed through a duplexer and isolator unit 51 connected between the antenna and the UMTS power amplifier 49 which selectively allows a received signal at the antenna to be directed towards a receiver circuit.

The great advantage of the circuit described above is that a single RF synthesizer, running at 2.7GHz in the above example, is all that is required for the generation and transmission of both a dual mode (850/900 and 1800/1900) GSM signal and a 3G UMTS signal. The use of the dividers and mixers ensures that the desired carrier and output frequencies are always at fixed multiples of the synthesizer frequency. Thus is possible to provide a combined dual mode GSM and 3G UMTS transmitter in a single circuit that has a relatively large number of common circuit components for both transmission paths.

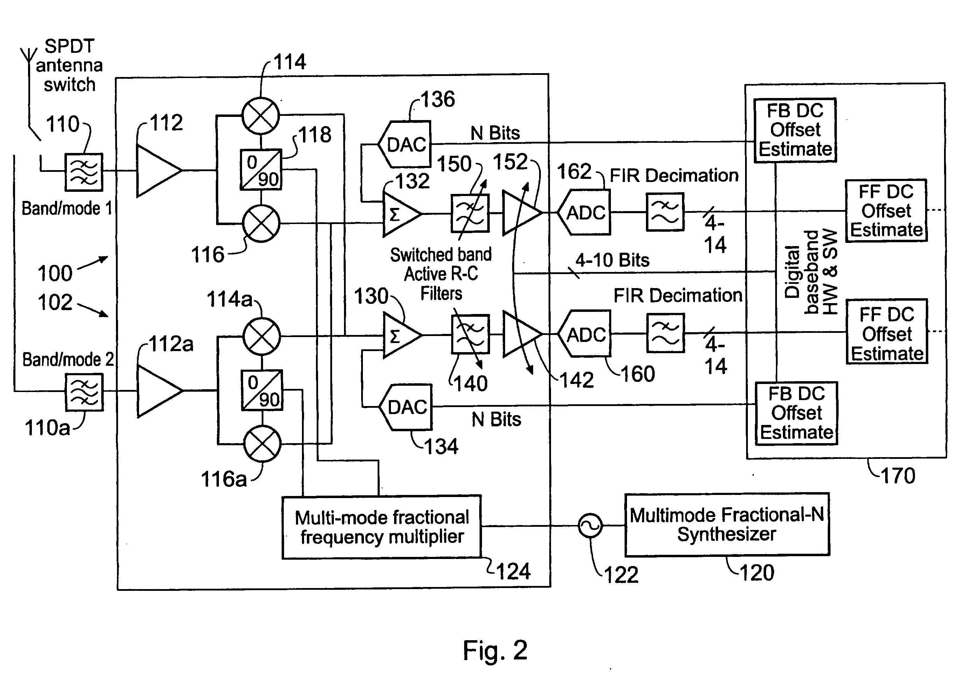

Figure 2 schematically illustrates a direct conversion (also known as homodyne) multi mode receiver. The receiver comprises two channels, generally indicated 100 and 102 for convenience. Schematically, the channels are identical so only the first channel will be described in detail for convenience. However, in terms of operating performance, the channels may operate at different frequencies, for example around 800 to 1000 MHz for GSM 850 and GSM 900 and around 1.7 to 2.2 GHz for GSM 1800, GSM 1900 and UMTS. In these circumstances the individual components of the channels may be tailored in order to operate at their respective bands. Each channel comprises a band pass filter 110 and 110a which serves to reject signals outside the pass band of the receiver. Thus, the filter 110 for the first channel 100 may be centered 900 MHz, whereas the filter 110a for the second channel 102 may be centered around 1.8 GHz or so. These filters are necessary to stop powerful out of band transmissions from driving the receiver into saturation. The output of the band pass filter 110 is provided to an input of an amplifier 112 whose output is provided to the first inputs of mixers 114 and 116, respectfully. Second inputs of the mixers 114 and 116 receive in-phase and quadrature versions of a locally generated carrier signal. The in-phase and quadrature versions of the signal are generated by a phase shifter 118 which itself receives the locally generated signal from the combination of a multi mode fractional synthesizer 120, a voltage controlled oscillator 122 and a multi mode fractional frequency multiplier 124. The components 120, 122 and 124 are shared by each of the channels 100 and 102. The mixers 114 and 116 mix the locally generated reference signal together with the received radio signal in order to form the difference frequency therebetween. Since both the radio frequency and the locally generated frequency are nominally at the same frequency, the information in the radio frequency is directly down converted to base band. The base band signal is provided at the output of each of the mixers 114 and 116. The outputs of the in-phase mixers 114 and 114a are provided to a first input of an in-phase summer 130 which is shared between both channels. Similarly, the outputs of the quadrature mixers 116 and 116a are provided to the first input of a quadrature summer 132 which is also shared between both channels. Each of the summers 130 and 132 is also connected to receive an offset signal generated by a respective digital to analog converter 134 and 136. The ability to provide an offset is important since local oscillator coupling to the RF inputs could generate a DC offset, the size of which depends on both the magnitude and phase of the spuriously coupled signal with respect to the locally generated reference. The output of the summer 130 is provided to the input of an electronically controlled low pass filter 140 which in turn is followed by an electronically controlled variable gain amplifier 142. Similarly the output of the summer 132 is provided to an electronically controlled low pass filter 150 and a variable gain amplifier 152. The outputs of the amplifiers 142 and 152 are provided to respective analog to digital converters 160 and 162 whose digital outputs, after filtering in respective finite impulse response filters are provided to a signal processing and control unit 170. For each of the in-phase the quadrature channels, the control unit estimates the offset that is required for each of the channels and provides an offset signal to the digital to analog converters 134 and 136. The control unit 170 also sets up the filter characteristics of the switched filters 140 and 150 in the way appropriate to the operating mode of the receiver.

It is thus possible to provide a multi mode direct conversion receiver architecture as shown in Figure 2. The architecture has the advantage that much of the receiver hardware is reused for different modes of operation. The reuse of common hardware can provide a significant cost and power saving when compared with duplicating functionality as has hitherto been the case.

The analog base band sections are designed so that they can be reconfigured to meet the requirements of the various transmission systems. This means that the architecture must allow for the:

i. reconfiguring of the gain line up,
ii. reconfiguring of the channel filters
iii. reconfiguring of the analog to digital converters speed and resolution, and
iv. reconfiguring of the DC offset compensation

As noted hereinbefore separate radio frequency low noise amplifiers and in-phase/quadrature down converters are utilized as these need to be optimized for the frequency and mode of operation. Although in principle it is practical to have a reconfigurable RF front end for different modes of operation, it is believed to be more cost effective at the present time to have dedicated RF front ends.

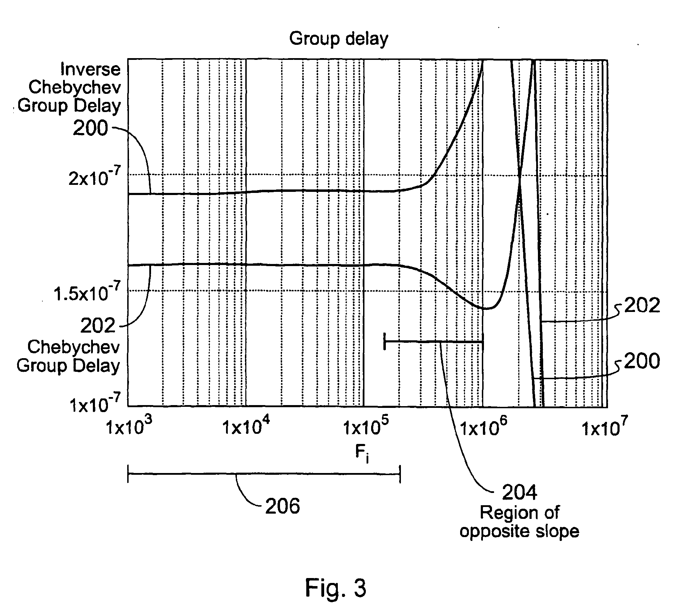

As noted hereinbefore, it is highly desirable that the analog processing circuitry within a mobile telephone has filters included therein which can give both rapid attenuation between the pass band and the stop band, and which also exhibit good group delay, and specifically do not exhibit differential group delay so as to avoid inter-symbol interference. Figure 3 compares the group delays of an inverse Chebychev filter, represented by line 200, and the group delay of a Chebychev filter, represented by line 202, plotted as a function of frequency. Frequency units have been included on the ordinate of figures 3, 4 and 5 such that the various graphs can be easily compared. It will be seen that, in the example given in Figure 3, the inverse Chebychev group delay starts to increase for frequencies in excess of $2 \times 10^5$ radians per second. However, the Chebychev group delay starts to decrease for angular frequencies in excess of $2 \times 10^5$ radians per second and this decrease continues until the frequency $10^6$ radians per second, then the Chebychev group delay increases sharply. It will be appreciated that in the limited region 204 where the group delays are of an opposite sign, partial cancellation of the group delay characteristics can be achieved thereby effectively extending the region 206 extending from low frequencies up to approximately $2 \times 10^5$ radians per second where the group delays are essentially invariant with respect to frequency to an increased upper frequency of $10^6$ radians per second.

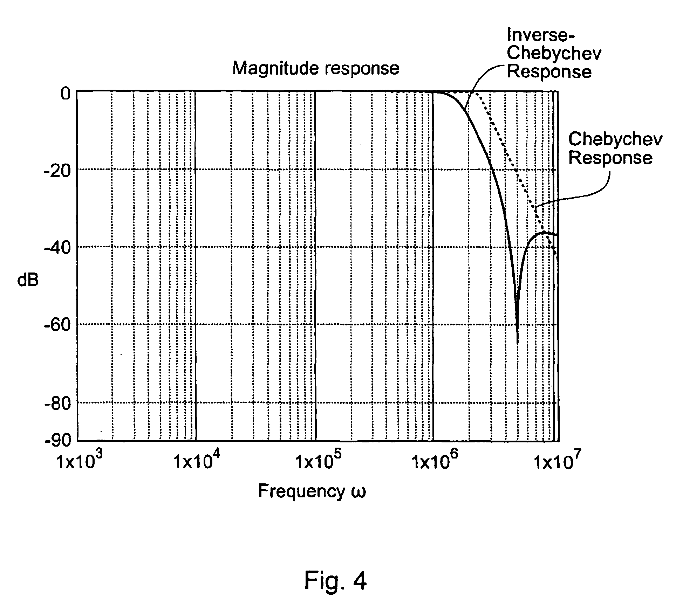

Figure 4 schematically illustrates the magnitude response for the inverse Chebychev and Chebychev filters whose group delays were shown in Figure 3. It can be seen that the inverse Chebychev filter in this example has a substantially flat magnitude response up to approximately $10^6$ radians per second, and then the magnitude response falls steeply towards a notch occurring at $5 \times 10^6$ radians per second. At this point, the magnitude of the response is suppressed by over 60 dB. The Chebychev filter also has a substantially uniform magnitude response in the pass band, but has a roll over frequency of approximately $2 \times 10^6$ radians per second from where the magnitude falls off rapidly.

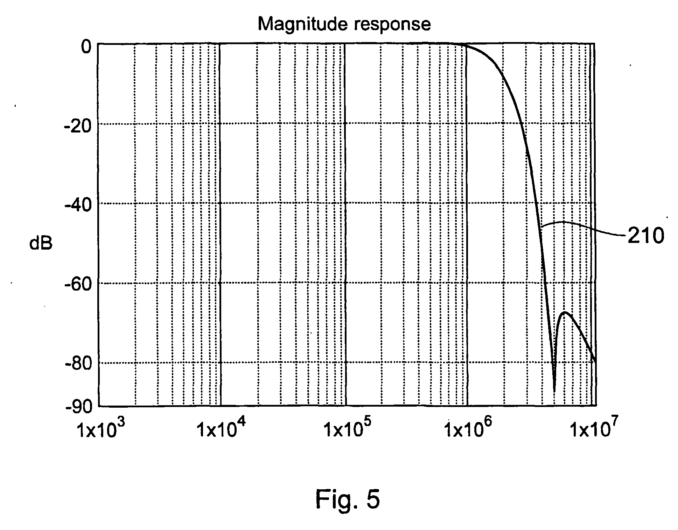

Figure 5 shows the combined magnitude response of a Chebychev/inverse Chebychev filter using the individual filters shown in Figures 3 and 4. It is seen that the combined response 210 is substantially flat up to $10^6$ radians per second and then falls steeply, being approximately 10 dB down by $2 \times 10^6$ radians per second and over 60 dB down by $5 \times 10^6$ radians per second. Furthermore, the group delay can be maintained as substantially constant up to $1 \times 10^6$ radians per second.

It is appreciated by the person skilled in the art that analog filter design is an immensely complex mathematical exercise. It is, however, also well known that many filter designs have already been analyzed and described in a normalized form such that an engineer can effectively use a "recipe" of a standard form to design a specific filter characteristic. Furthermore, computer aided design packages now also allow for filter characteristics to be accurately depicted. For these reasons, the specifics of the design do not need to be described in detail as sufficient support exists in the prior art to enable the person skilled in the art to implement the filter. However, for the specific filters whose responses are shown in Figures 3 to 5, the Pole positions for Inverse Chebychev response were calculated by first calculating the pole positions for Chebychev response and using pole reciprocation.

$$p = \begin{bmatrix} 1.204 + 2.258i \\ 2.408 \\ 1.204 - 2.258i \\ -1.204 - 2.258i \\ -2.408 \\ -1.204 + 2.258i \end{bmatrix}$$

Valid poles exist in the negative half of the S-plane

$$z = \begin{bmatrix} 0 \\ 1.155i \\ 0 \\ 1.63{\cdot}10^{16}i \end{bmatrix} \qquad \omega z := \left| z_1 \right|$$

Position of stopband zero

The Inverse Chebychev Transfer function used was

$$Hic_i := \frac{\left[\left(\frac{1}{P_3}\right)\cdot\left(\frac{1}{P_4}\right)\cdot\frac{1}{P_5}\right]\cdot\left[\left(\frac{s_i}{\omega c}\right)^2 - (z_1)^2\right]\cdot\left[\left(\frac{s_i}{\omega c}\right)^2 - (z_3)^2\right]}{\left[\left[\left(\frac{s_i}{\omega c} - \frac{1}{P_3}\right)\cdot\left(\frac{s_i}{\omega c} - \left(\frac{1}{P_4}\right)\right)\right]\cdot\left[\left(\frac{s_i}{\omega c}\right) - \left(\frac{1}{P_5}\right)\right]\cdot\left[(z_1)^2\right]\cdot(z_3)^2\right]}$$

The Pole Positions for solution to Chebychev Polynomial were

$$pl = \begin{bmatrix} 0.313 + 1.022i \\ 0.626 \\ 0.313 - 1.022i \\ -0.313 - 1.022i \\ -0.626 \\ -0.313 + 1.022i \end{bmatrix}$$

Valid poles exist in the negative half of the S-plane

The Chebychev Transfer Function used was

$$Hc_i := \frac{pl_3 \cdot pl_4 \cdot pl_5}{\left[\left(\frac{s_i}{\omega cl} - pl_3\right)\cdot\left(\frac{s_i}{\omega cl} - pl_4\right)\cdot\left(\frac{s_i}{\omega cl} - pl_5\right)\right]}$$

The Transfer Function of Hybrid Filter is the combination of the two individual transfer functions:

$$X_i := \left(Hc_i \cdot Hic_i\right)$$

Being a hybrid filter, each of the two elements of the filter can be individually adjusted to better tailor the response of the filter to meet the needs of the particular application

For example, with the Chebychev response, it is possible to adjust the following:

1. The cut-off frequency
2. The filter order (number of poles)
3. The in-band ripple

For the Inverse Chebychev filter, it is possible to adjust the following:

1. The minimum stop-band attenuation
2. The maximum tolerable pass-band roll off
3. The relative frequency at which the minimum stop-band attenuation is reached
4. The filter order

The filter order can be adjusted by implementing the filter as a cascade of filter stages (i.e. the stages are connected one to another) whereby one or more stages can be switched out of the cascade such that they are bypassed. Thus bypassing a stage reduces the order of the filter.

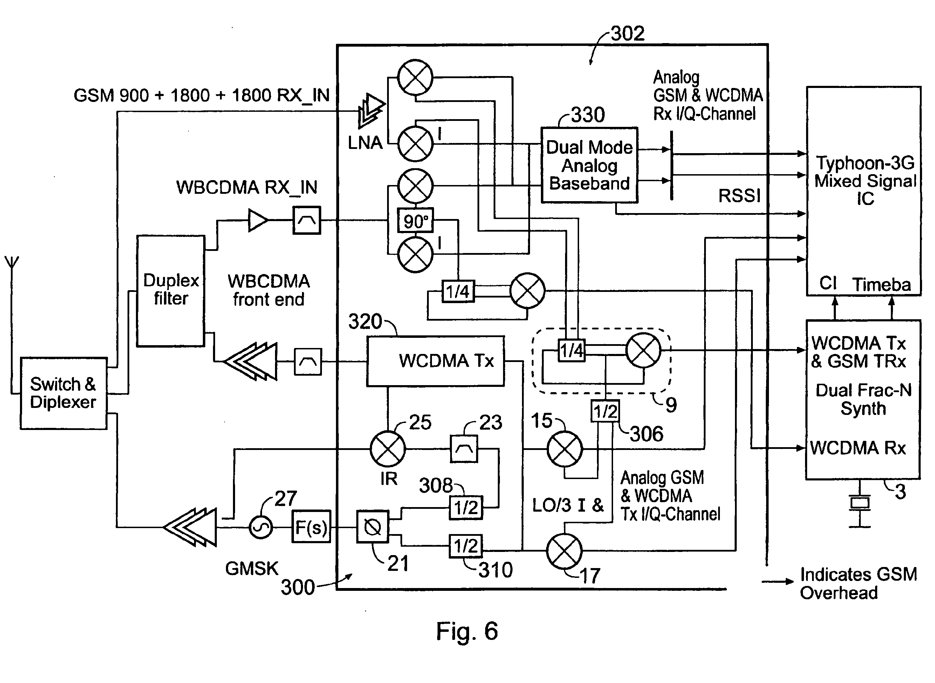

Figure 6 schematically illustrates a dual mode GSM/UMTS transceiver constituting an embodiment of the present invention. The transceiver generally comprises a transmission channel 300 and a reception channel 302. Although represented in simplified form in Figure 6, the transmission channel 300 actually contains the dual mode transmitter shown in Figure 1 of the present drawings. In order to simplify the understanding of Figure 6, those parts of Figure 6 which are similar to parts shown in Figure 1 will be given like reference numerals thus, it can be seen that the transmitter receives a frequency synthesized signal from a synthesizer 3, that this synthesized signal is passed through a divide by three frequency divider 9 before being provided to the in-phase and quadrature mixers 15 and 17 of the up-converter. The output of the up-converter is, in a GSM mode supplied to a phase locked loop frequency shifter comprising a phase detector 21, a voltage controlled oscillator 27, a mixer 25 and a band pass filter 23. Thus the operation of these components is as described hereinbefore with reference to Figure 1. It may be noticed that there are further divide by two frequency dividers 306, 308 and 310 shown in the transmitter schematic, but it will be appreciated that these have little overall effect on the final operation of the transmitter, and in particular that frequency dividers 308 and 310 effectively nullify each other, although they do allow for the mark space ratio of the wave forms to be converted to an ideal 50-50. Similarly, the UMTS path comprises an array of linear amplifiers and a frequency up-converter. The components labeled 37, 39, 41 and 43 as shown in Figure 1 are schematically represented by the box 320 in Figure 6.

It will be appreciated that the receiver section 302 is a simplified representation of Figure 2. Here the multi-mode fractional frequency multiplier 124 of Figure 2 is also embodied within the dual fraction synthesizer 3 shown in Figure 6. It can also clearly be seen that two channels are provided, each having an in-phase and quadrature mixer for frequency down-converting the received signal to the base band. The components 130, 132, 134, 136, 140, 142, 150, 152, 160 and 162 of Figure 2 are schematically represented by the box 330 in Figure 6. It is clear that both the transmitter channels share components, both the receiver channels share components, and indeed that the receiver and transmitters share the frequency synthesizer components. This sharing of components allows for cost reductions in the final price of the integrated circuit, and also reduces the overall power consumption of the transceiver compared to implementations where each of these components are provided for their individual functions, and hence effectively duplicated.

GSM works on a time division duplex system and hence the transmitter and receiver are not operating concurrently. However UMTS operates on full duplex and consequently the transmitter and receiver do operate concurrently. In the UMTS mode it is important to limit the desensitization of the receiver due to interactions with the UMTS transmitter. This is achieved firstly by not integrating the low noise power amplifier with the chip itself, and secondly by limiting the transmitter power at the transmitter output pins. Furthermore, it is important to ensure that the noise level in receive band at the transmit output is adequate. For example, with an external low noise amplifier having 13 dB of gain, the transmit power being limited to +3 dBm at the transmitter output pin and a transmit noise floor in the receive band of -140 dBc/Hz if isolation of 30 dB is obtained between the transmitter and receiver then the impact of the transmitter on receiver sensitivity will be approximately 0.1 dB.

The architecture shown in Figure 6 is operable in several modes, the frequency plan for the transceiver may be as follows:

GSM 850/900 receive mode - the synthesizer frequency is three times the RF frequency.
GSM 1800/1900 receive mode - the synthesizer frequency is 1.5 times the carrier frequency.
UMTS receive mode - the synthesizer frequency is 1.5 times the RF carrier frequency.
GSM 850/900 transmit mode - the synthesizer frequency is 3 times the RF carrier frequency and the intermediate frequency is a ½ of the RF carrier frequency.
GSM 1800/1900 transmit mode - the synthesizer frequency is 1.5 times the RF carrier frequency and the intermediate frequency is ¼ of the RF carrier frequency.
UMTS transmit mode - the synthesizer frequency is 1.5 times the RF carrier frequency and the intermediate frequency is ¼ of the RF carrier frequency.

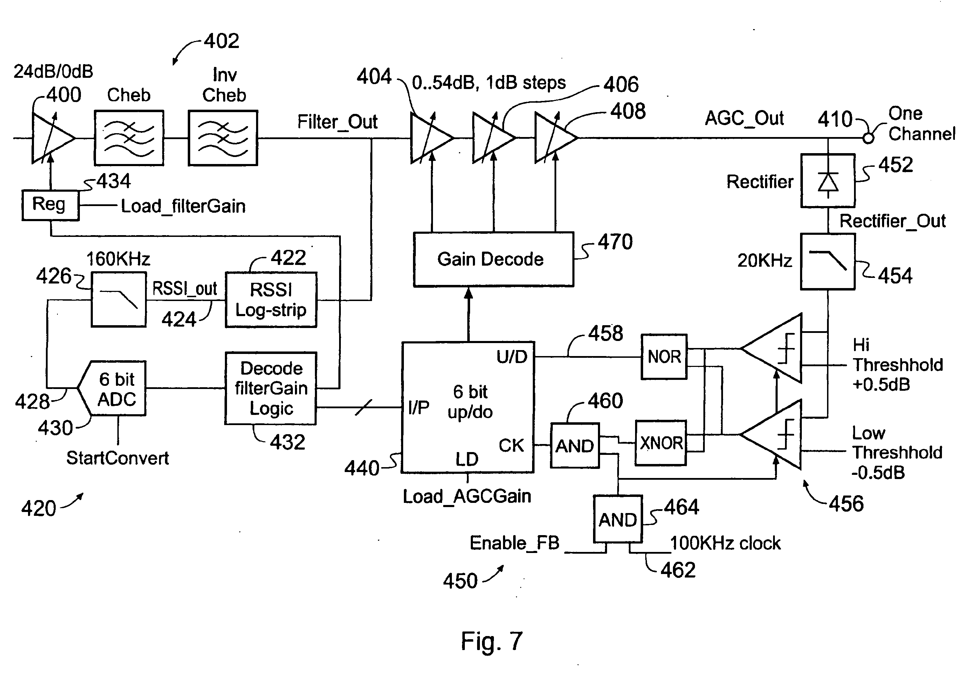

Figure 7 schematically illustrates a hybrid feed forward and feed back automatic gain control system constituting an embodiment of the present invention. The circuit diagram shows a variable gain amplifier whose output is supplied to the hybrid Chebychev/inverse Chebychev filter, generally indicated 402, which has hereinbefore been described. An output of the hybrid filter 402 is provided to the input of a further variable gain amplifier which is schematically represented as three independently electronically controllable variable gain amplifiers 404, 406 and 408 which together serve to provide a variable gain between zero and 54 dB in one dB steps. An output of the final amplifier 408 is provided as an output 410 from the automatic gain controller.

The feed forward controller, generally indicated 420, comprises a received signal strength indicator (RSSI) log strip which has an input connected to the output of the hybrid filter 402. The RSSI log strip is used to estimate the signal strength at the output of the hybrid filter. The RSSI log strip 422 produces as an output thereof 424 a voltage which is substantially linearly proportional to the composite power of the signal at the output of the filter expressed in dBm. This output signal is filtered by a low pass filter 426 before being supplied to the analog input 428 of a six bit analog to digital converter 430. The signal at the input 428 of the analog to digital converter 430 is digitized in response to a "start convert" signal and the output of the conversion is supplied to a filter gain logic controller 432. The filter gain logic controller has two outputs, one of which is supplied to a register 434 for controlling the gain of the variable gain amplifier 400, whilst the other output is supplied as a 6 bit word to a 6 bit updown counter 440. Thus, the counter can be loaded with the output of the filter gain logic controller 432.

The signal in a UMTS receiver is a composite of the wanted signal, noise and any residual interfering signals. This composite signal appearing at the output of the hybrid filter 402 is digitized to produce a digital word that has the characteristic of "A" dB per bit, where A represents an arbitrary number. This control word is used to set the gain of the variable gain amplifiers. The variable gain amplifiers are designed to have a gain reduction characteristic of "A" dB per bit. As such, if the signal level into the receiver increases by 5 A dB, then the digitized control word will also increase by 5. This in turn will result in the reduction of the gain of the variable gain amplifiers 404, 406 and 408 by a composite gain amounting to 5A dB. Thus the signal level at the output of the variable gain controller 410 is kept substantially constant. Because the approach described so far uses feed forward techniques, there are no band-width implications that might affect a feed back system. Thus, it is possible to rapidly set up gain for the automatic gain controller for example when switching modes of operation or channels. Having rapidly acquired the composite signal level and setting up an initial gain, further gain control is performed by a feedback scheme.

The feedback controller, generally indicated 450, comprises a rectifier 452 connected to the output of amplifier 408 in order to deduce a rectified signal representing the signal power at the output of the amplifier 408. The signal from the rectifier 452 is low pass filtered by a filter 454 before being supplied to the inputs of a window comparator 456 which, as recognized by the person skilled in the art, compares the signal at the input therein with high and low thresholds defining a window and produces an output 458 which is indicative of whether the signal is below the window threshold or above the window threshold. The signal 458 is provided to a count direction control input (up/down input) of the counter 440. As shown in Figure 7, the window comparator 456 is also configured to provide an output which indicates when the input thereto is within the bounds defining the window, and this output is sent to an AND gate 460 which serves to gate the provision of a clock signal to the counter 440. Thus, when the output 410 is within the power band defined by the window comparator 456, the counter 440 is inhibited from receiving its clock signal. The clock signal 462 is also ANDed with an "enable feedback" signal at an AND gate 464 which gives overall control of whether the feedback loop should operate or not. The output of the AND gate 464 is provided to an input of the AND gate 460, the output which is connected to the clock pin of the counter 440. The output of the counter 440 is provided to a gain decoder 470 which in turn sets the gains of the amplifiers 404, 406, and 408.

In use, the signal level detector and window comparator is used to ensure that the composite signal level and the amplifier outputs is kept within a narrow range, for example +/-0.5 dB. If the composite signal level is above the threshold of the window comparator, the up/down counter is enabled and the gain is adjusted on every clock cycle. As such, the clock sets the time constant of the feedback loop. If the composite signal level is below the window comparator threshold, then the up/down counter is also enabled, but this time counts in the opposite direction. As a consequence, the feedback loop will act to always ensure that the composite signal level is tightly controlled and adjusted at a rate determined by the frequency of the clock 462.

Referring to Figure 2, it should be noted that every time a gain control adjustment is made or a offset correction is made, this step change can result in a transient DC offset appearing at the output of the filter. The DC offsets could be removed by a high pass filter, but for a truly generic receiver it is better that the DC offset correction should be performed in the digital domain. Thus at each gain change a new DC offset is estimated and the estimate is supplied to the converters 134 and 136 such that a correction is added at the summers 130 and 132. This said, the transient occurring as a result of gain change still has an unwanted effect of the low pass filters 140 and 150. This transient decays in time, but during the settling time of the filter the homodyne receiver is effectively blinded. This is because the conversion range of the analog to digital converter will necessarily be limited, and the offset may cause the converter to have to convert outside its nominal operating range.

Given that the receiver is effectively non-functional during this transient period, the inventor has realized that it is permissible to change the filter characteristics during the short period in order to allow for a more rapid settling time.

Thus, when a change in gain or offset is implemented, the high pass filter is simultaneously, or near simultaneously set to a wide bandwidth such that the DC transient will quickly settle. The settling time can be estimated from known characteristics of the filter. After the settling time, the filter is automatically switched back to the nominal required setting for its proper operation. The filter can be under the control of a timer, for example implemented as a monostable, which alters the filter characteristics for a brief but well defined period. This technique ensures the fastest possible receiver settling time whilst at the same time minimizing the amount of wanted modulation energy that might be removed by the high pass filter. A typical ratio between the two bandwidth settings might be in the order of 10 to 1, although this is only a non-limiting example and other ratios may be chosen by the design. The implementation of this technique is not dependent on the filter technology. Thus the filter might be implemented as a switched capacitor filter, a switched bandwidth active R-C filter, gyrator- capacitor filter and so on. The specific implementation of the filter is within the knowledge of the person skilled in the art.

It is thus possible to provide a multi mode receiver and transceiver which are particularly suited for use in mobile telephony.

**Claims**

1.  A receiver (1) including at least one electronically reconfigurable filter (140), **characterized in that** the receiver further comprises a DC offset generator (134, 136) and a controller (170) wherein the receiver is a direct conversion multimode receiver, the electronically reconfigurable filter is arranged to filter a base band signal, the filter comprises a combination of a Chebychev filter and an inverse Chebychev, and the controller (170) controls the offset generator and the filter response as a function of reception mode and signal conditions.

2.  A receiver as claimed in claim 1, in which the electronically reconfigurable filter (140) is a low pass filter.

3.  A receiver as claimed in claim 1 or 2, in which the inverse Chebychev filter is controllable so as to adjust at least one characteristic thereof selected from a list comprising minimum stop band attenuation, maximum tolerable pass band roll off, frequency at which minimum stop band attenuation is reached, and the order of the filter.

4.  A receiver as claimed in any one of claims 1 to 3, wherein the Chebychev filter is controllable to adjust at least one characteristic from a list comprising cut-off frequency, an order of the filter and pass-band ripple.

5.  A receiver as claimed in any of the preceding claims, in which the DC offset generated by the DC offset generator (134, 136) is added to the down converted signal upstream of the at least one electronically reconfigurable filter (140).

6.  A receiver as claimed in any of claims 1 to 4, in which the DC offset generated by the DC offset generator is added to the down converted signal downstream of the at least one electronically reconfigurable filter (140).

7.  A receiver as claimed in claim any of the preceding claims, in which the receiver has an "in-phase" channel and a "quadrature" channel.

8.  A receiver as claimed in any of the preceding claims, further comprising a variable gain amplifier (152) responsive to a controller so as to maintain signal amplitude at an output of the variable gain amplifier within a predetermined range.

9.  A receiver as claimed in any of the preceding claims, in which the signal from the receiver is converted to a digital form by an analog to digital converter, and the controller (170) is responsive to the digital form and uses this to derive the DC offset to be applied by an offset generator to the down converted signal.

10. A receiver as claimed in any of the preceding claims, further comprising first and second radio frequency front ends for receiving transmissions in at least first and second frequency bands or transmission modes.

11. A receiver as claimed in claim 10, in which the first radio frequency front end is arranged to receive at least one of GSM 850 MHz and GSM 900 MHz transmissions.

12. A receiver as claimed in claim 10, in which the second radio frequency front end is arranged to receive at least one of GSM 1800 MHz and GSM 1900 MHz transmissions.

13. A receiver as claimed in claim 10, in which one of the front ends is arranged to receive at least one of UMTS 2100 MHz and UMTS 1900 MHz.

14. A receiver as claimed in any of the preceding claims, wherein the Chebychev and inverse Chebychev responses are selected so as to provide substantially constant group delay within a pass band of the filter.

15. A receiver as claimed in any of the preceding claims, in which the individual cut-off frequencies of the Chebychev and inverse Chebychev filters are independently adjustable so as to allow the group delay and selectivity of the filter to be varied according to the nature of the signal being filtered.

16. A receiver as claimed in any one of the preceding claims in which the receiver is operable to receive GSM and UMTS transmissions.

**Patentansprüche**

1. Empfänger (1), der zumindest ein elektronisch rekonfigurierbares Filter (140) beinhaltet, **dadurch gekennzeichnet, dass** der Empfänger ferner einen DC-Offset-Generator (134, 136) und einen Controller (170) aufweist, wobei der Empfänger ein Direktumwandlungs-Multimode-Empfänger ist, wobei das elektronisch rekonfigurierbare Filter angeordnet ist, um ein Basisbandsignal zu filtern, wobei das Filter eine Kombination aus einem Tschebyscheff-Filter und einem inversen Tschebyscheff aufweist und der Controller (170) den Offset-Generator und die Filterantwort abhängig vom Empfangsmodus und den Signalbedingungen steuert.

2. Empfänger nach Anspruch (1), bei dem es sich bei dem elektronisch rekonfigurierbaren Filter (140) um ein Tiefpassfilter handelt.

3. Empfänger nach Anspruch 1 oder 2, bei dem das inverse Tschebyscheff-Filter steuerbar ist, um zumindest eine Charakteristik desselben einzustellen, die aus einer Liste ausgewählt wird, die eine minimale Stoppbanddämpfung, ein maximal tolerierbares Passband-Roll-Off, eine Frequenz, bei der eine minimale Stoppbanddämpfung erreicht wird, und die Ordnung des Filters aufweist.

4. Empfänger nach einem der Ansprüche 1 bis 3, bei dem das Tschebyscheff-Filter steuerbar ist, um zumindest eine Charakteristik aus einer Liste einzustellen, die eine Grenzfrequenz, eine Ordnung des Filters und eine Passbandwelligkeit aufweist.

5. Empfänger nach einem der vorhergehenden Ansprüche, bei dem das durch den DC-Offset-Generator (134, 136) erzeugte DC-Offset dem down-konvertierten Signal signalverlaufsmäßig vor dem zumindest einen elektronisch rekonfigurierbaren Filters (140) hinzugefügt wird.

6. Empfänger nach einem der Ansprüche 1 bis 4, bei dem das durch den DC-Offset-Generator erzeugte DC-Offset dem down-konvertierten Signal signalverlaufsmäßig nach dem zumindest einen elektronisch rekonfigurierbaren Filters (140) hinzugefügt wird.

7. Empfänger nach einem der vorhergehenden Ansprüche, wobei der Empfänger einen "In-Phase"-Kanal und einen "Quadratur"-Kanal aufweist.

8. Empfänger nach einem der vorhergehenden Ansprüche, der ferner einen auf Controller reagierenden, variablen Verstärkungsverstärker (152) aufweist, um eine Signalamplitude an einem Ausgang des variablen Verstärkungsverstärkers innerhalb eines vorbestimmten Bereichs beizubehalten.

9. Empfänger nach einem der vorhergehenden Ansprüche, bei dem das Signal aus dem Empfänger durch einen Analog-zu-Digital-Wandler in eine digitale Form umgewandelt wird, und der Controller (170) auf die digitale Form reagiert und diese dazu benutzt, das DC-Offset herzuleiten, das durch einen Offset-Generator an das down-konvertierte Signal angelegt wird.

10. Empfänger nach einem der vorhergehenden Ansprüche, der ferner erste und zweite Funkfrequenz-Eingänge zum Empfangen von Übertragungen in zumindest einem ersten und zweiten Frequenzband oder Übertragungsmodi aufweist.

**11.** Empfänger nach Anspruch 10, bei dem der erste Funkfrequenz-Eingang so angeordnet ist, dass es zumindest entweder GSM-850-MHz- oder GSM-900-MHz-Übertragungen empfängt.

**12.** Empfänger nach Anspruch 10, bei dem der zweite Funkfrequenz-Eingang so angeordnet ist, dass es zumindest entweder GSM-1800-MHz- oder GSM-1900-MHz-Übertragungen empfängt.

**13.** Empfänger nach Anspruch 10, bei dem einer der Eingänge so angeordnet ist, dass es zumindest entweder UMTS-2100-MHz- oder UMT-1900-MHz-Übertragungen empfängt.

**14.** Empfänger nach einem der vorhergehenden Ansprüche, bei dem die Tschebyscheff- und die inversen Tschebyscheff-Antworten so ausgewählt sind, dass sie eine im Wesentlichen konstante Gruppenverzögerung innerhalb eines Passbands des Filters ermöglichen.

**15.** Empfänger nach einem der vorhergehenden Ansprüche, bei dem die einzelnen Grenzfrequenzen der Tschebyscheff- und inversen Tschebyscheff-Filters unabhängig voneinander einstellbar sind, so dass die Gruppenverzögerung und Selektivität des Filters entsprechend der Beschaffenheit des gefilterten Signals variiert werden können.

**16.** Empfänger nach einem der vorhergehenden Ansprüche, wobei der Empfänger zum Empfang von GSM- und UMTS-Übertragungen betrieben werden kann.

**Revendications**

**1.** Récepteur (1) comprenant au moins un filtre reconfigurable électroniquement (140), **caractérisé en ce qu'**il comprend également un générateur de décalage (134, 136) du niveau de courant continu (DC) et un organe de commande (170), le récepteur étant un récepteur multimode à conversion directe, le filtre reconfigurable électroniquement étant conçu pour filtrer un signal en bande de base et comprenant une combinaison d'un filtre de Tchebychev et d'un filtre de Tchebychev inverse, et l'organe de commande (170) commandant le générateur de décalage et la réponse du filtre en fonction de conditions de mode de réception et de signal.

**2.** Récepteur tel que défini dans la revendication 1, dans lequel le filtre reconfigurable électroniquement (140) est un filtre passe-bas.

**3.** Récepteur tel que défini dans la revendication 1 ou 2, dans lequel le filtre de Tchebychev inverse est apte à être commandé pour ajuster l'une au moins de ses caractéristiques choisies dans une liste comprenant une atténuation minimum de la bande coupée, une coupure maximum admissible de la bande passante, une fréquence à laquelle une atténuation minimum de la bande coupée est atteinte et l'ordre du filtre.

**4.** Récepteur tel que défini dans l'une quelconque des revendications 1 à 3, dans lequel le filtre de Tchebychev est apte à être commandé pour ajuster au moins une caractéristique choisie dans une liste comprenant une fréquence de coupure, un ordre du filtre et une ondulation dans la bande passante.

**5.** Récepteur tel que défini dans l'une quelconque des revendications précédentes, dans lequel le décalage du niveau de courant continu généré par le générateur de décalage (134, 136) du niveau de courant continu est ajouté au signal à fréquence abaissée en amont du ou des filtres reconfigurables électroniquement (140).

**6.** Récepteur tel que défini dans l'une quelconque des revendications 1 à 4, dans lequel le décalage du niveau de courant continu généré par le générateur de décalage du niveau de courant continu est ajouté au signal à fréquence abaissée en aval du ou des filtres reconfigurables électroniquement (140).

**7.** Récepteur tel que défini dans l'une quelconque des revendications précédentes, dans lequel le récepteur possède un canal "en phase" et un canal "en quadrature".

**8.** Récepteur tel que défini dans l'une quelconque des revendications précédentes, comprenant également un amplificateur à gain variable (152) apte à répondre à un organe de commande pour maintenir une amplitude de signal au niveau de sa sortie dans une plage prédéterminée.

**9.** Récepteur tel que défini dans l'une quelconque des revendications précédentes, dans lequel le signal provenant

**EP 1 476 950 B1**

du récepteur est converti dans une forme numérique par un convertisseur analogique/numérique, et l'organe de commande (170) est sensible à la forme numérique et utilise celle-ci pour obtenir le décalage du niveau de courant continu qui doit être appliqué par un générateur de décalage au signal à fréquence abaissée.

10. Récepteur tel que défini dans l'une quelconque des revendications précédentes, comprenant également des premier et second étages d'entrée radiofréquence pour recevoir des transmissions dans au moins des premier et second modes de transmission ou bandes de fréquences.

11. Récepteur tel que défini dans la revendication 10, dans lequel le premier étage d'entrée radiofréquence est conçu pour recevoir des transmissions GSM (système global pour les communications mobiles) 850 MHz et/ou GSM 900 MHz.

12. Récepteur tel que défini dans la revendication 10, dans lequel le second étage d'entrée radiofréquence est conçu pour recevoir des transmissions GSM 1800 MHz et/ou GSM 1900 MHz.

13. Récepteur tel que défini dans la revendication 10, dans lequel l'un des étages d'entrée est conçu pour recevoir des transmissions UMTS (service de télécommunications mobiles universelles) 2100 MHz et/ou UMTS 1900 MHz.

14. Récepteur tel que défini dans l'une quelconque des revendications précédentes, dans lequel les réponses des filtres de Tchebychev et de Tchebychev inverse sont sélectionnées pour fournir un retard de groupe sensiblement constant à l'intérieur d'une bande passante du filtre.

15. Récepteur tel que défini dans l'une quelconque des revendications précédentes, dans lequel les fréquences de coupure individuelles des filtres de Tchebychev et de Tchebychev inverse peuvent être ajustées de manière indépendante pour permettre une variation du retard de groupe et de la sélectivité du filtre en fonction de la nature du signal en train d'être filtré.

16. Récepteur tel que défini dans l'une quelconque des revendications précédentes, apte à fonctionner pour recevoir des transmissions GSM et UMTS.

Fig. 1

Fig. 2

Fig. 3

Fig. 4

Fig. 5

Fig. 6

EP 1 476 950 B1

Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• EP 722226 A

**Non-patent literature cited in the description**

• **SPRINGER et al.** RF systems concepts for highly integrated RFICs for W-CDMA mobile radio terminals. *IEEE Transactions on Microwave Theory and Techniques,* January 2002, vol. 50 (1